# EUROPEAN PATENT SPECIFICATION

(11) **EP 1 927 938 B1**
(45) Date of publication and mention of the grant of the patent: **16.07.2014**
(21) Application number: 08004346.6
(22) Date of filing: 16.05.2003
(51) Int. Cl.: G06K 17/00, G06Q 10/08

(54) **Method for package sortation and delivery using radio frequency identification technology**
Verfahren zur Packetsortierung und Zustellung unter Verwendung von RFID Technologie
Procédé de triage et de livraison de colis utilisant la technologie RFID

(30) Priority: 16.05.2002 US 381485 P
(43) Date of publication of application: 04.06.2008
(62) Divisional of application: 03724586.7
(73) Proprietor: United Parcel Service Of America, Inc., Atlanta, GA 30328 (US)
(72) Inventor: Baldassari, Anthony, Denville NJ 07834 (US); Peters, Robert, Atlanta GA 30356 (US)
(74) Representative: Chettle, Adrian John

(56) References cited:
- EP-A- 1 189 163
- WO-A-00/46726
- WO-A1-01/85582
- US-A- 4 672 553
- US-A- 4 832 204
- US-A- 5 880 451

## Description

### TECHNICAL FIELD

The present invention relates to the use of radio frequency identification technology in package sortation and delivery systems.

### BACKGROUND ART

Barcodes are well known in the package delivery industry as a method of identifying and tracking packages. The barcode is a binary code consisting of a field of bars and gaps arranged in a parallel configuration. The bars and gaps are arranged according to a given pattern that corresponds to some data. The configuration of the bars and gaps reflect a pattern when illuminated by a laser scanner. The optical power received by the scanner can then be processed and the data associated with the configuration extracted. Thus, in the case of barcode reading, transmission of data is performed optically.

In the context of a package delivery system, packages bearing barcodes are scanned at various points in a carrier system and the data captured from the barcodes are used to route the package through the system. In addition, the information captured from the barcode may be uploaded to a package tracking database and made available to shippers and consignees that wish to track the progress of a package through the carrier system. However, there are several limitations with using barcodes to perform these functions. For one, the process of scanning a barcode requires a direct line of sight between the reader and the barcode. Even in automated carrier sortation facilities, packages must be manually placed on the sortation conveyor belts so that the barcode of the package shipping label will be properly aligned for the scanning process. Another problem is that the barcode becomes unreadable if the code is obscured or if the package label bearing the code is damaged in the shipping process.

A need therefore exists in the industry for an improved method of capturing package information that overcomes deficiencies in the prior art, some of which are discussed above.

US 4832204 discloses a package handling and sorting system which sorts small packages according to destination, segregating those with the same destinations for combined shipments. The system depends on a combination of conveying equipment automatically controlled by programmed data processing units which utilize data obtained by scanning electronically readable package labels. Bar code labels are used to identify packages being processed. The packages are loaded directly onto tilt trays. The tilt trays are continuously carried on an endless conveyor chain carousel past package discharge chutes located around the carousel, specific chutes corresponding to specific destination areas.

EP 1189163 discloses a method and system for management of logistic processors and shipment tracking. The method involves using at least one radio frequency identification device or RFID read write device in association with at least one item of the logistic chain, at least one multiple rewriteable RFID transponder associated with at least one packet or object.

US 4672553 discloses a method and apparatus of order processing in which item identifying codes of packages loaded onto a conveyor are scanned and, based on comparisons of the items in a group of order stored in a computer, the package is distributed to corresponding order-assembly lanes. In one embodiment the apparatus includes an endless conveyor having a series of tilt trays for transporting items of merchandise bearing product-identifying codes from the loading end along a path that passes a series of ejector devices. In advance of each ejector device, there is a code reader. In another embodiment the apparatus includes a succession of conveyor portions in the form of plural physically independent belt conveyors. Between each belt conveyor and the next there is a selective package delivery means, in the form of an ejector mechanism. All of the belt conveyors are alike, except that they make different path lengths, and their electric drive motors are alike. All the motors are turned on and off in unison. Accordingly, the belt conveyors transport packages at the same speed.

US 5880451 discloses a system for using OCR processing to read human readable characters that correspond to an unsuccessfully decoded code words in a bar code symbol. A label includes a bar code symbol and corresponding human readable characters. If the bar code characters are not successfully decoded, the system locates the associated human readable text and segments the text into individual character images. The unsuccessfully decoded bar code character is mapped to one or more of the alphanumeric character images, which are converted into text characters, and the resulting data is used to create a substitute bar code character in the bar code symbology.

WO 01/85582 discloses a conveyor induct system which includes a control point subsystem for measuring the point at which control of an article transitions from one conveyor to another. The induct system also includes a subsystem for accurately creating or controlling the gaps between articles on the conveyor system. The control point subsystem monitors the location, and changes in the speed, of an article as it passes between two conveyors operating at different speed. The gap control subsystem provides real time monitoring and measuring of the package gaps. The measured package gaps are fed into a feedback control system which alters the speed of a conveyor in order to change the gapping as desired.

### DISCLOSURE OF INVENTION

The described hereinabove, and achieve numerous advantages not disclosed methods and systems, in their various embodiments, overcome the disadvantages previously possible.

According to the present invention there is provided a method according to claim 1.

The disclosure is also directed to related systems and computer-readable media.

### BRIEF DESCRIPTION OF THE DRAWINGS

Having thus described the invention in general terms, reference will now be made to the accompanying drawings, which are not necessarily drawn to scale, and wherein:
Fig. 1 illustrates a package sortation system that employs RFID technology to capture package information in accordance with an embodiment of the present invention.
Fig. 2 is another view of a package sortation system in accordance with an embodiment of the present invention.
Fig. 3 illustrates a package sortation system as a component of a package pre-load system in accordance with an embodiment of the present invention.
Fig. 4 illustrates a pre-load assist system in accordance with an embodiment of the present invention.
Fig. 5 illustrates how a pre-load assist label is used to load a package onto a package car in accordance with an embodiment of the present invention.
Fig. 6 is a process flow diagram that illustrates the steps of a pre-load process in accordance with an embodiment of the present invention.
Fig. 7 is a process flow diagram that illustrates the steps of selecting a dispatch plan in accordance with an embodiment of the present invention.
Fig. 8 is a process flow diagram that illustrates the steps of initializing a dispatch plan and readying the plan for real-time access in accordance with an embodiment of the present invention.
Fig. 9 is a process flow diagram that illustrates the steps of assigning pre-load handling instructions to packages in accordance with an embodiment of the present invention.
Fig. 10 shows to pre-load assist labels in accordance with an embodiment of the present invention.
Fig. 11 is a screen shot from a dispatch management system that is monitoring a pre-load operation in accordance with an embodiment of the present invention.
Fig. 12 illustrates an enhanced DIAD download system in accordance with an embodiment of the present invention.

### BEST MODE FOR CARRYING OUT THE INVENTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

### A. Radio Frequency Identification Technology

A technology known as radio frequency identification technology (RFID) uses radio waves rather than optics to capture and transmit data. RFID is basically a form of labeling where electronic labels or tags are programmed with unique information and attached to objects to be identified or tracked. In RFID electronic chips are used to store data that can be broadcast via radio waves to a reader, eliminating the need for a direct line of sight and making it possible for tags to be placed anywhere on or in a package. Additional benefits of RFID are the greater data storage capacity of the RFID tag in comparison to the barcode and the decreased likelihood that the RFID tag will be destroyed or otherwise made unreadable.

A typical RFID system consists of a reader, a tag and a data processing system to process the data read from the tag. The tag also is called a transponder, an expression which is derived from TRANSmitter/resPONDER and, in some cases, the term tag is used for low-frequency (e.g. 125kHz), whereas the term transponder is used for high-frequency (e.g. 13.56MHz and 2.45GHz) tags. But for purposes of this application the terms tag and transponder are used interchangeably. The complexity of the reader (sometimes referred to herein as an interrogator) can vary considerably, depending on the type of tag used and the function to be fulfilled. In general, a reader has radio circuitry to communicate with a tag, a microprocessor to check and decode the data and implement a protocol, a memory to store data and one or more antennas to receive the signal.

Unlike a barcode reader, which is limited to reading a single barcode at a time, a RFID reader may have more than one tag in its interrogation zone. The interrogation zone, as that term is used herein, refers to the area covered by the magnetic field generated by the reader's antenna. The process of reading a number of transponders within a system's interrogation zone is known as batch reading. Software applications known as anticollision algorithms exist that permit a reader to avoid data collision from several tags that enter the interrogation zone at the same time. One of three different anticollision techniques is generally implemented; these techniques are spatial, frequency and time domain procedures.

In the spatial domain technique, the reader restricts its interrogation zone in order to reduce the possibility that two different transponders fall into the area covered by the reader itself. With this technique, the number of readers needed to cover an area increases in proportion to the size of the covered area. Frequency domain procedures are based on frequency domain multiplex techniques or spread spectrum technologies. In these systems, the reader broadcasts a status of frequencies allocated to the communication with the transponders, with frequencies flagged that are currently in use by a transponder. When a new transponder accesses the reader's coverage, it uses an unoccupied frequency to transmit its data.

Time domain anticollision techniques are divided into two categories: interrogator and transponder driven procedures. In addition, interrogator driven time domain anticollision procedures can be sub-divided into polling and binary search procedures. Polling techniques make use of the fact that a unique serial number is written to each transponder at the production stage. In the polling technique, the interrogator requests all possible transponder serial numbers until a transponder with a polled serial number responds. The polling procedure is typically slow and generally is limited to processes employing small numbers of transponders. The other interrogator driven procedure is the binary search. A binary search is faster than the polling technique, and is based on search algorithms that use binary trees of transponder identifiers. In the transponder driven anticollision procedures, the transponder, rather than the interrogator, controls the data flow. In general, transponder driven procedures are based on the cyclic transmission of identifiers by transponders and are designed such that it is unlikely that any two transponders will send the same identifier at the same time.

### B. Use of RFID Technology in a Carrier Hub Sortation

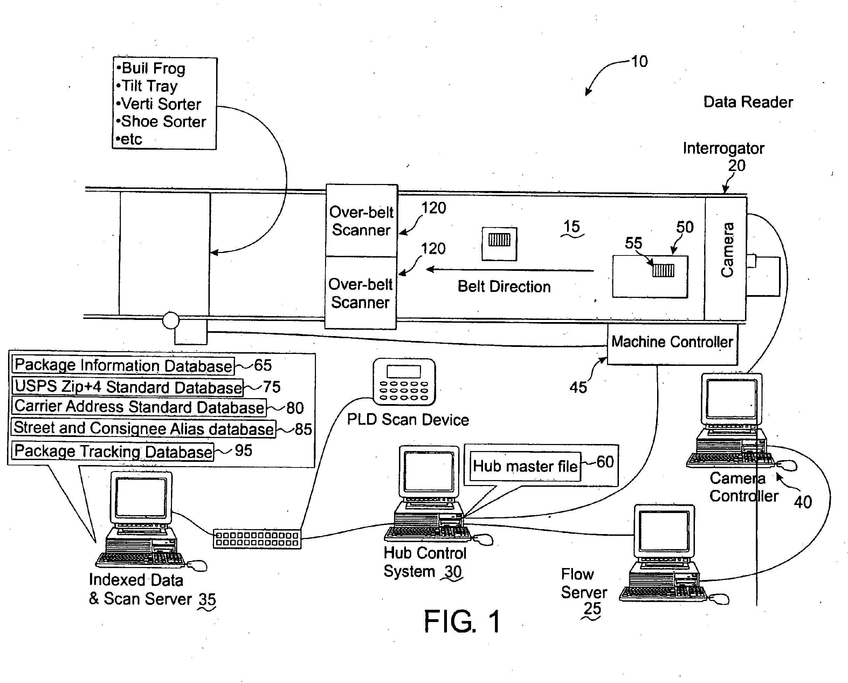

The following paragraphs describe novel methods and systems wherein RFID technology is used in connection with a package sortation and delivery system. Fig. 1 illustrates a package sortation system **10** that employs RFID technology to capture package information. In this embodiment, the sortation system **10** includes a conveyor belt **15,** an interrogator **20,** a flow server **25,** a hub control system **30,** an indexed data server **35,** a camera controller **40** and a machine controller **45.**

The package sortation system **10** described herein may be used in a carrier hub facility or as part of a pre-load sortation system. A carrier hub facility is typically an interim facility where packages are sorted for shipment to other carrier facilities in route to their ultimate destinations. In contrast, packages that pass through a pre-load sortation system are sorted onto package cars and delivered to their final destination. Although the following paragraphs describe this embodiment of the package sortation system **10** in the context of a carrier hub facility, one of ordinary skill in the art will readily recognize that this embodiment is equally advantageous in the pre-load sortation context, or in any other package sortation operation.

Packages arrive at a carrier hub facility and are placed on a conveyor belt **15,** which takes the packages to the package sortation system **15.** Each package is equipped with a RFID package tag **50** that may be part of or separate from the shipping label on the package. In a preferred embodiment, the RFID package tag **50** has a unique alphanumeric character string (herein referred to as a RFID identifier **55)** that identifies the package. Packages may be individually placed on the conveyor belt **15** or may be grouped together in a package container. Because the package tag communicates via a radio signal, the orientation of the package on the conveyor belt is irrelevant. Whereas in a barcode sortation system a person must manually align the packages onto the conveyor belt **15** in preparation for a scanning process, in the present invention movement of packages onto the conveyor belt **15** may be automated.

As a package moves on the conveyor belt **15** to the sortation system **10,** an interrogator **20** reads the RFID package tag **50** and captures an RFID identifier **55** associated with the package. RFID package tags **50** may be active or passive depending on whether they have an on-board power source or not. In general, active tags use batteries to power the tag transmitter (radio) and receiver. These tags usually contain a greater number of components than do passive tags. Therefore, active tags are usually larger in size and are more expensive than passive tags. In addition, the life of an active tag is directly related to battery life. In contrast, a passive tag reflects the RF signal transmitted to it from a reader and adds information by modulating the reflected signal. A passive tag does not use a battery to boost the energy of the reflected signal. But a passive tag may use a battery to maintain memory in the tag or power the electronics that enable the tag to modulate the reflected signal.

A benefit of using RFID technology to capture a package identifier is the speed at which the package tag **50** can be read. Whereas it can take as long as two to three seconds to scan a barcode by hand, a RFID package tag **50** can be read in approximately twenty-five milliseconds. As a result, the present invention allows the conveyor belt **15** to be set at a higher speed and packages are processed by the sortation system **10** in less time.

When the interrogator **20** reads the RFID package tag **50,** the package RFID identifier **55** is captured and sent to the flow server **25,** which, in turn, passes the package identifier **55** to the hub control system **30.** In a preferred embodiment, the hub control system **30** is a system that controls the movement of packages through the carrier hub facility. A carrier hub facility generally contains multiple conveyors that move packages to various tip positions within the building, and the hub control system **30** is aware of every location within the facility. The term tip position is known in the art and refers to a location in a carrier hub facility in which packages bound for a particular destination are tipped off a conveyor belt and prepared for transit to that destination. Thus, for example, a hub control system **30** may recognize that packages that are bound for Atlanta, Georgia need to be sorted to tip position 1, whereas packages bound for Los Angeles, California should be sent to tip position **49.**

At the start of a package sort, the hub control system **30** retrieves a hub master file **60** associated with the hub facility and maps the information from the hub master file **60** to the sortation and tip positions for the hub facility. In a preferred embodiment, the data in the hub master file **60** determines the path that will be used to move packages through the hub facility to their next destination. The hub control system **30** contacts the hub master file **60** and downloads every possible carrier hub facility that might be the next destination of a package involved in the package sort. The hub control system **30** then maps each potential package destination to a unique tip position in the hub facility. As packages are received, the hub control system **30** uses the hub master file 60 to determine the next hub facility destination for the package. The hub control system **30** then determines which location within the building (i.e. which tip position) to sort the package to so that the package will be routed to the proper hub facility. And finally, the hub control system **30** determines the sortation path through the building so that the package will be sorted to the proper tip location.

Returning to Fig. 1, if the package information received by the hub control system **30** includes the destination zip code and service level for the package, the hub control system **30** issues a hub handling instruction for the package. In one embodiment, the RFID identifier **55** captured by the interrogator and passed to the hub control system **30** includes sufficient information to generate a hub handling instruction. In an alternative embodiment, the RFID identifier **55** does not contain sufficient package information to allow the hub control system **30** to assign a hub handling instruction and the identifier **55** is forwarded on to the indexed data server **35.**

If the hub control system **30** cannot generate a hub handling instruction, the RFID identifier **55** is sent to the indexed data server **35** and used as an index into a package information database **65.** The package information database **65** contains detailed information about some or all of the packages in the carrier system. This information may originate with shippers that electronically upload the shipping detail for the packages placed in the carrier system. Alternatively, a carrier service provider may have picked up the package from the shipper and entered the package information. Still another possibility is that another carrier application and/or operator captured the package detail information as part of an earlier package sort and uploaded the information to the package information database **65.** Additional information about the capture, storage and access of package level detailed information is set forth in International Application No. WO 00/46726.

In a preferred embodiment, before the first call is made to the package information database **65,** the package address data in the database is validated (or scrubbed) against one or more address databases in an address management system **70.** In one embodiment, the address management system **70** validates package level detail information against three databases, including a United States Postal Service (USPS) zip+4 standard database **75,** a carrier address standard database **80** and a street and consignee alias database **85.** The USPS zip+4 standard database **75** includes all of the zip+4 addresses known to and maintained by the USPS. The carrier address standard database **80** includes those addresses known to the carrier that are not known to the USPS. In many cases, the addresses in the carrier address database are addresses of individuals who live in rural areas where mail is delivered to a post office box rather than to a physical address.

The third address database used to validate the package level detail data is referred to herein as a street and consignee alias database **85.** In a preferred embodiment, the street and consignee alias database **85** includes alias information that the carrier has created based on historical delivery information. A "street alias" as that term is used herein is a commonly-used name for a street or an address that is different from the street address found in either the USPS or carrier address databases. For example, the USPS address standard for a particular street may be Route 45. But Route 45 may be commonly referred to as York Street by the people that live or do business on the street and, in fact, York Street may be the street name that is listed on street signs in the area. Thus, it is not uncommon for packages that are sent to Route 45 to bear the name York Street. Using an address management system interface **90,** a user may create an alias entry in the street and consignee aliases database **85** so that when the address management system **70** receives a reference to York Street, the system **70** will treat the address as a valid reference to Route 45.

A "consignee alias," as that term is used herein, refers to a commonly used consignee name, which is associated with a particular address. As an example, assume a popular restaurant bears the name Jack & Jill's Sandwich Shop and is located at 10 Main Street, Baltimore, MD 20093. In the USPS zip+4 address database **75** the only valid address for this location may be 10 Main Street, Baltimore, MD 20093. In a preferred embodiment, carriers generally store address ranges rather than individual addresses; therefore, the carrier may recognize 10 Main Street through 99 Main Street as valid addresses for Baltimore, MD 20093. However, in the package delivery industry it is not uncommon for packages to be addressed to a popular consignee name. In this example, then, a carrier might receive a package addressed to Jack & Jill's Sandwich Shop, Baltimore, MD 20093 or, alternatively addressed as Jack & Jill's, Maryland 20093. By using in the address management GUI, a carrier can create a consignee alias that associates either of these shorthand addresses to the standard address for the restaurant. Thus, when the address management system 70 receives either of these non-standard references to the address for Jack & Jill's Sandwich Shop, the system 70 will treat the shorthand reference as a valid address.

Following the validation of the address data in the package information database **65** the package sort begins. If the hub control system **30** cannot assign a hub handling instruction to the package, the RFID identifier **55** is passed to the indexed data server **35** and used to search the now-validated package information database **65** to determine if a record of the package exists. If the package information database **65** has package detail data for the package, the service level and destination address are returned to the hub control system **30** and a hub handling instruction is assigned.

But if the package information database **65** does not have a record of the package, then package sortation system **10** relies on key-entry to capture the package information. In one embodiment, an operator stands near the conveyor belt **15** and manually retrieves any packages that are not assigned a hub handling instruction. The operator physically reviews the shipping label of the package and key enters the package service level and destination address. In a preferred embodiment the key-entered information is sent to the flow server **25,** which passes the key-entered address to the address management system **70** to be validated. If a valid address has been key-entered, a hub handling instruction is generated based on the package address and service level. If the shipping label is unreadable and/or if no valid address can be key-entered from the package shipping label, the package is identified as an exception and set aside for special handling.

In an alternative embodiment, the package sortation system **10** includes a camera controller **40** that captures an image of every package that passes through the system **10.** If neither the indexed data server **35** nor the hub control system **30** are able to assign a hub handling instruction to the package, the image of the package is sent to a telecode operator who attempts to key enter the package information shown on the image. A typical telecoding operation is described in greater detail in U.S. Patent No. 5,770,841 to Moed. Because this embodiment requires a package label to be scanned, the package may need to be oriented in such a way that the camera controller **40** can capture an image of the label. As before, if the key-entered package information is valid, the hub control system **30** generates the appropriate hub handling instruction. But if the operator cannot obtain an address from the package or if the address entered is invalid, the package is flagged for exception handling.

In a preferred embodiment, the camera controller **40** captures an image of every package that passes through the sortation system **10** and the images that are unused are discarded. Alternatively, the camera controller **40** captures only those images of packages that are not automatically assigned a hub handling instruction.

When the hub control system **30** assigns a hub handling instruction to a package, the hub handling instruction is sent to the machine controller **45.** In a preferred embodiment, the machine controller **45** implements the hub handling instruction. Machine controllers **45** are known in the art. In general, the package sortation system **10** uses conventional systems, including belt optical encoders, to track the position of packages as they move through the hub. The systems used to track and direct the movement of packages through a hub facility are known in the art. Information about the use of tilt trays in a sortation system is available in U.S. Patent Nos. 5,433,311 and 5,489,017, both issued to Bonnet and both of which are herein incorporated by reference. U.S. Patent 6,005,211 to Huang and U.S. Patent No. 5,547,063 to Bonnet also discuss the use of the sorter in the hub.

In an alternative embodiment, the package sortation system **10** uses a series of RFID interrogators to continuously track packages as they move on conveyor belts 15 through the hub facility. In this embodiment, the machine controller **45** receives package location information from these readers and directs packages to their respective tip positions by controlling the speed and motion of the various conveyor belts **15.** Thus, when the machine controller **45** receives a handling instruction that identifies the appropriate tip position for a package, the machine controller **45** sends commands to the belt conveyors **15** in the hub facility to divert the package to the identified tip position.

In a preferred embodiment, when the machine controller **45** has sorted a package to a tip position specified in a hub handling instruction, the controller **45** updates the indexed database server **35** to reflect the new location of the package. The package information database **65** is thus updated with the latest package location information. In addition, the indexed data server **35** updates an accessible, for example via the Internet, package tracking database **95** so that the shipper, consignee or other persons tracking the package can determine updated status information as the package is sorted through the hub facility and routed to the next stop in the carrier system. If desired, such persons may receive status notification, for example by email, at any point in the handling of the package.

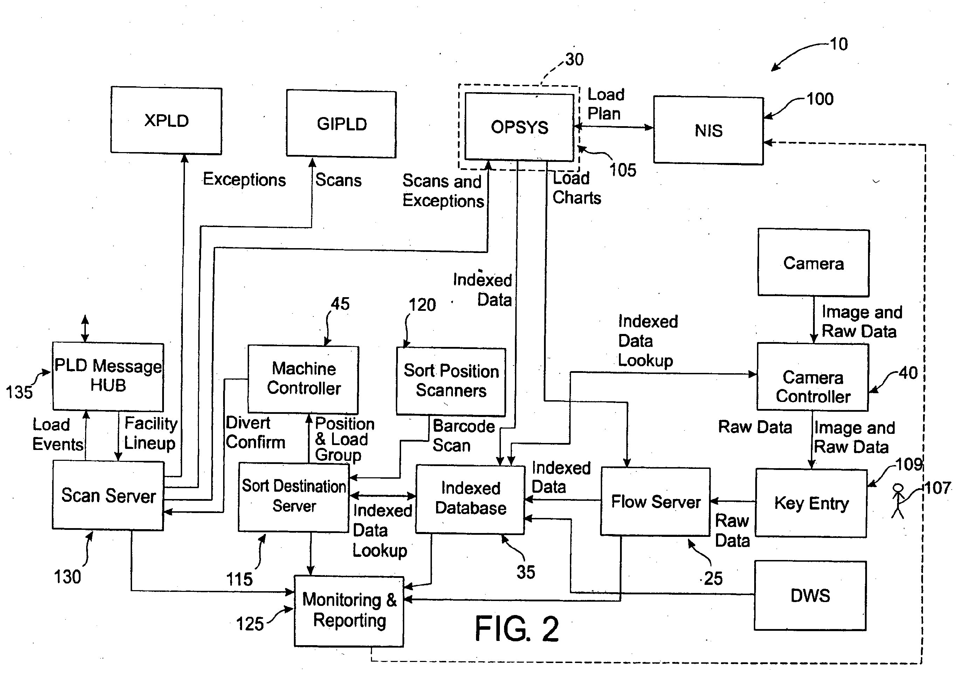

Fig. 2 is another view of the package sortation system **10** that shows the data flow between some of the applications that are used in a package sort. At the start of the sort, a network information system (NIS) **100** sends a load plan to an hub operating application **105.** The load plan is the file that controls the movement of packages through the carrier system in route to their ultimate destinations. Thus, for example, if a package is shipped from Chicago to Florida, the load plan generated by NIS **100** determines which carrier facilities between Chicago and Florida will be used to route the package. Load plans such as described herein are known in the art.

The hub operating application **105** controls the movement of packages within the hub facility, and is configured to receive the load plan from the NIS **100** and map the sortation positions in the hub facility to the package destinations established by the load plan. The hub operating application **105** also performs a manifest operation that requires the application **105** to track the location of every package in the hub facility. As packages are sorted for shipment to other carrier facilities, the hub operating application **105** notifies the other facilities which packages are inbound and approximates when the packages will arrive. If packages are misrouted or otherwise depart from their delivery schedules, the hub operating application **105** handles the rescheduling and re-forecasting of the packages. Thus, if a package destined to a carrier site is delayed, the hub operating application **105** reschedules the package and notifies the carrier site of the delay and new forecasted time of arrival.

In a preferred embodiment, the hub operating application **105** is part of the hub control system **30** and communicates with the indexed database server **35** and the flow server **25.** As described above, the flow server **25** receives the RFID identifier **55** captured from the package and passes the information to the hub control system **30** and/or the indexed database server **35** in an effort to assign a hub handling instruction to the package. If neither the hub control system **30** nor the index database server **35** can assign a hub handling instruction to a package, the flow server **25** retrieves an image of the package label from the camera controller **40** and sends the image to an operator **107** at key entry unit **109.** And the operator key-enters the package address shown on the shipping label unit **109** transmits via unit **109** after the key-entered address data to the flow server **25.**

In a preferred embodiment, the package sortation system **10** also includes a dimensional weighing system (DWS) **110.** The DWS **110** is a device that weighs and measures packages as they travel along the conveyor belt **15.** The weight and size of a package can be relevant to the sortation process as the weight and/or size of a package may affect the hub handling instruction assigned to the package. For example, a conveyor in a hub facility may not be able to handle packages over a specified weight, or a particular package container may not be able to hold packages that exceed a threshold size. Thus, in a preferred embodiment, the DWS **110** sends the weight and size of packages to the indexed database server **35** so that the appropriate hub handling instruction is generated for heavy and/or oversized packages. Additional information about dimensional weighing is available in U.S. Patent Nos. 5,672,815 to Prutu, 5,340,950 to Smith, 5,408,054 to Smith and 5,908,283 to Huang.

Those of ordinary skill in the art will appreciate that other kinds of data may be used for sorting packages. For example, such data can include data indicating whether the package is subject to duty or tariff, the value of the package contents, special handling instructions, and possibly other data. This data can be scanned directly from an RFID tag associated with the package using the interrogator and/or can be retrieved from one or more databases based on data scanned from the RFID tag.

In a preferred embodiment, the indexed database server **35** also communicates with a sort destination server **115** and one or more sort position scanners **120.** In general, these are scanners and/or RFID tag readers that are placed farther down the conveyor belt **15** from the interrogator **20.** In a preferred embodiment, these devices keep track of the location of packages so that the machine controller **45** can determine when to move or tip the package to another sortation area. The sort destination server **115** also serves as an interface between the machine controller **45** and the indexed database server **35.** In a preferred embodiment, the sort destination server **115** accesses the indexed data server **35** and determines the tip position for a package, and then passes the tip position to the machine controller **45.** The sort destination server **115** also stores the building configuration for the hub facility and, in a preferred embodiment provides for real-time manual and automated adjustments to the facility line-up.

The monitoring and reporting component **125** of the package sortation system **10** monitors the progress of the package sort. In a preferred embodiment, the monitoring and reporting component **125** monitors and reports all aspects of the package sort, including without limitation, total package volume sorted, package volume sorted by tip position, packages sent to exception handling and packages requiring key-entry. In addition, at the end of the sort, the monitoring and reporting component **125** passes the package sortation data back to the NIS **100,** which uses the information in creating future load plans.

In a preferred embodiment, the machine controller **45** communicates with a scan server and/or an RFID interrogator server **130** to monitor and direct the movement of packages through the hub facility. As packages are sorted and moved from one conveyor to another, conventional systems track the movement of the packages. In another embodiment, RFID interrogators scan packages in the system and communicate the package locations to the machine controller **45,** and the machine controller **45** uses the package location information to direct the movement of the package to the tip position indicated by the hub handling instruction. In a preferred embodiment, the RFID interrogator/scan server **130** also receives the divert information from the machine control systems and controls the movement of the package through the hub.

As packages are sorted to their respective tip positions, data about the package sortation is passed to one or more carrier databases for various purposes, including without limitation: package tracking, volume forecasting and load handling. In a preferred embodiment, a package level detail hub **135** uploads data to carrier systems and thereby serves as an interface between the package sortation system **10** and the carrier databases. As packages move through the hub facility, the package level detail hub **135** receives package sortation data from the scan/RFID interrogator server **130** and uploads the data to the various carrier databases.

### C. Use of RFID Technology in a Package Pre-load System

In the package delivery context, the pre-load process is an important stage in the delivery system. The packages have arrived at a carrier destination facility and pre-loaders are responsible for loading packages onto package cars for delivery to their ultimate destinations. A carrier destination facility generally has multiple package cars that are being loaded simultaneously and each package car is equipped with multiple package storage locations.

Pre-loaders have the responsibility of ensuring that packages are loaded on the correct storage location of the correct package car. To date, this has been a highly manual process requiring an extensive knowledge base on the part of the pre-loaders. Pre-loaders manually examine the destination address on the package shipping label and determine from memory, or with the aid of rudimentary load charts, which package car delivers to that address and which shelf on the package car is the appropriate storage spot for that package. The complexities associated with the pre-load process require that a pre-loader receive extensive training on how to properly load packages. In some cases, pre-load training lasts six or more weeks for each pre-loader, with additional time spent supervising recently trained pre-loaders. And notwithstanding the extensive training, the highly manual and knowledge-based nature of the process often results in errors in the pre-load process.

Another problem with pre-load systems that are known in the art is the reliance on the knowledge base of employees to perform a pre-load. As discussed above, much of the task of pre-loading relies on the ability of the pre-loader to look at the destination address of a package and remember where that package should be loaded. Whenever a dispatch plan changes, the pre-load plan also changes and the pre-loaders are required to learn the new load locations for each of the destinations. As a result, any changes to a dispatch plan that will impact the pre-load must be carefully considered as it requires a change in the pre-loaders' knowledge base and can negatively impact the package load operation.

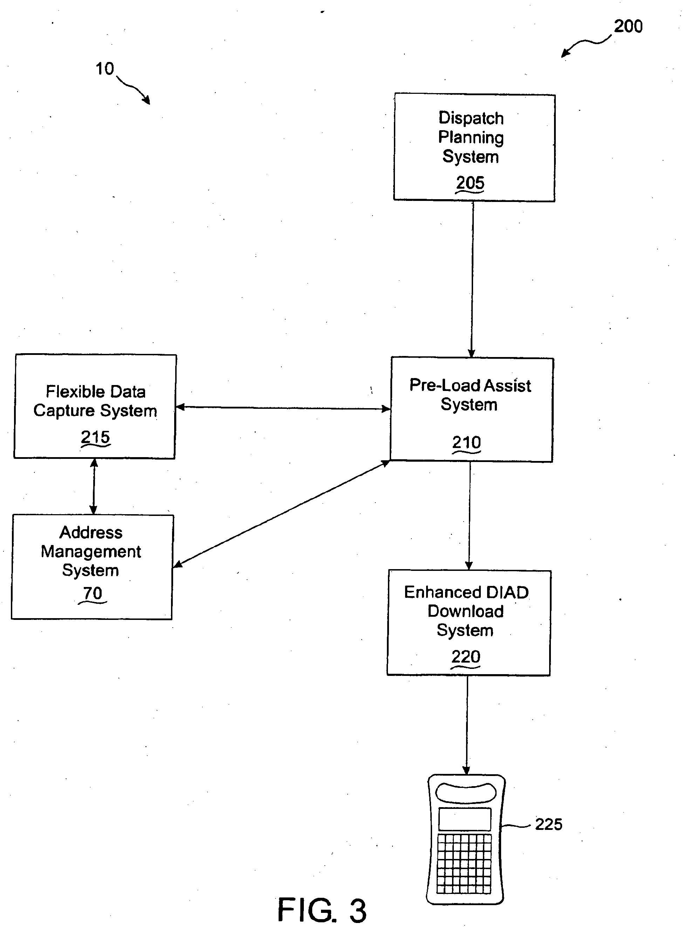

Fig. 3 illustrates an embodiment of a package sortation system **10 in** the context of a package pre-load system **200.** The package sortation system **10** of Fig. 3 includes several components, including a dispatch planning system **205,** a pre-load assist system **210,** a flexible data capture system **215,** an address management system **70,** an enhanced delivery information acquisition device (DIAD) download system **220,** and a DIAD unit **225.** Each of these systems is described in greater detail below.

A function of the dispatch planning system **205** is to generate and schedule one or more dispatch plans that directs the sequence in which service providers pick up and deliver packages in a designated geographical area. Dispatch plans are well known in the art and are used daily by package carriers such as the United Parcel Services (UPS). At a high level, a dispatch plan is a method of separating a geographical area or territory into one or more service provider routes (delivery routes) and for each delivery route describing a service sequence for the addresses in the route.

In a preferred embodiment, the dispatch plan published by the dispatch planning system **205** includes a sequence of address ranges and an associated pre-load handling instruction for each sequence and service level combination. As described below, the pre-load handling instruction identifies a load and a load position in a service provider vehicle. The dispatch plan information is published to the pre-load assist system **210** component of the system **10** at the start of the pre-load process. The pre-load assist system **210,** in turn, passes the address information from the dispatch plan to an address management system **70** to insure that the package address validation routine includes every address included in the dispatch plan.

As packages are received, the flexible data capture system **215** captures the service level and destination address from the shipping label on the packages. As described below, the data capture may occur automatically via a RFID tag interrogation process, or it may require user intervention and key-entry of the package data. The address information is then validated in the address management system **70** against an address standard, and the package address and service level information is forwarded to the pre-load assist system **210.**

In one embodiment, the pre-load assist system **210** matches the package address and service level against the dispatch plan information and returns a pre-load handling instruction. In an alternative embodiment, the address management system **70** handles the matching of the package address to the dispatch plan and passes an index to the matched dispatch plan record to the pre-load assist system **210,** which, in turn, returns the pre-load handling instruction.

The pre-load assist system **210** then formats the pre-load handling instruction and sends the information to the flexible data capture system **215** where a pre-load assist label (PAL) is printed and affixed to the package. The flexible data capture system **215** handles the printing of the PAL and the pre-load assist system **210** provides the pre-load handling instructions that make up the PAL. In a preferred embodiment, the pre-load assist system **210** provides the flexible data capture system **215** with all of the information necessary to print the PAL. One of ordinary skill in the art will readily recognize that a PAL could be printed by the pre-load assist system **210** or, alternatively, that a PAL image may be generated by the pre-load assist system **210** and transmitted to the flexible data capture system **215** for printing.

In a preferred embodiment, the pre-load handling instruction that is printed on the PAL identifies the package car on which the package will be loaded and a specific shelf location within the package car. The pre-load operation is thus greatly simplified by generating pre-load handling instructions for each package in the pre-load process. The simplified presentation of pre-load handling instructions allows an inexperienced pre-loader to become productive almost immediately as the knowledge base necessary to perform the pre-load operation is reduced. Prior to the present invention, pre-loaders were required to memorize potentially hundreds of addresses to load a delivery vehicle. Using the process described above, a pre-loader can readily perform the pre-load operation relying largely on the information present on the PAL.

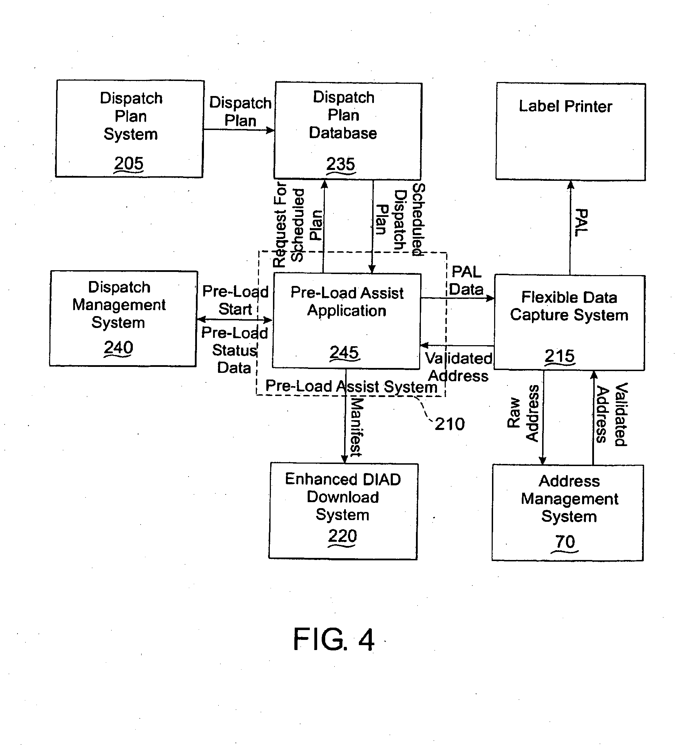

Fig. 4 illustrates a pre-load assist system **210** in accordance with an embodiment of the present invention. In this embodiment, a pre-load assist application **230** is in communication with a dispatch plan database **235,** flexible data capture system **215,** address management system **70,** enhanced DIAD download system **220,** a dispatch management system **240,** and a pre-load assist database **245.**

In a preferred embodiment, one or more dispatch plans are created by the dispatch planning system **205** and stored in a dispatch plan database **235.** At the start of a pre-load, the pre-load assist application **230** retrieves the available dispatch plans from dispatch plans database **295** and sends them to the dispatch management system **240** where a user has the option of accepting the scheduled dispatch plan or choosing another dispatch plan on which to base the pre-load. The user at the dispatch management system **240** initiates the pre-load operation and the pre-load assist application **230** prepares the dispatch plan for the pre-load process.

As packages arrive in the pre-load area, the flexible data capture system **215** captures the destination addresses and service levels of the packages (using processes described below) and validates the address information using the address management system **70.** A package service level and a valid destination address is passed to the pre-load assist application **230** and a match is made against the dispatch plan to obtain a pre-load handling instruction for the package. In an alternative embodiment, the matching of the package destination address against the dispatch plans is performed by the address management system **70** and the package service level and a dispatch plan index key is sent to the pre-load assist application **230** and used to generate the pre-load handling instructions.

The pre-load assist application **230** then passes the pre-load handling instruction information to the flexible data capture system **215** where the information is sent to a label printer and a pre-load assist label (PAL) is printed and affixed to the package.

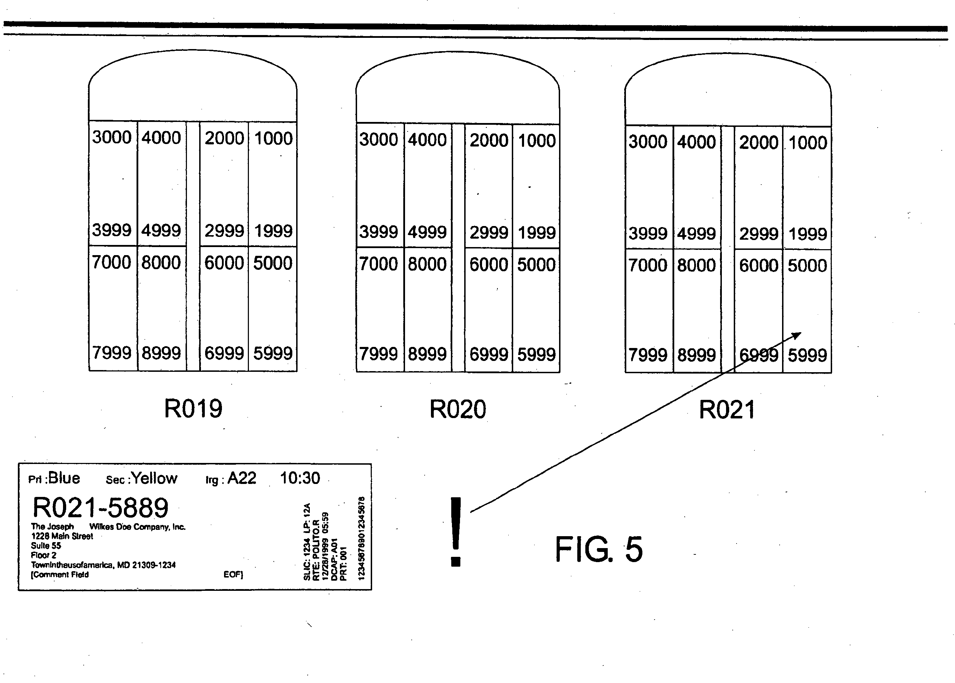

Fig. 5 illustrates how a PAL is used to load a package onto a package car. An example of a PAL is shown at the lower left-hand corner of Fig. 5. In a preferred embodiment, the pre-load handling instructions of a PAL comprise two 4-character identifiers separated by a hyphen. The four characters on the left of the hyphen identify the route on which the package will be loaded, and the four characters to the right of the hyphen identify the load location on the package car. Subject to certain exceptions, a single package car is generally associated with a route. Thus, when a pre-loader sees the pre-load handling instructions on the PAL, the pre-loader immediately knows the package car and load position for the package. In this way, the pre-load handling instructions on the PAL eliminate the pre-loader reliance on a knowledge base of load positions and addresses, and allow a pre-loader to perform the pre-load task without extensive training.

In the example illustrated in Fig. 5, the pre-load handling instructions on the PAL instruct the pre-loader to load the package in position 5889 of route R021. With these pre-load handling instructions as a guide, the pre-loader identifies which of the three package cars is assigned to route R021 and loads the package in the shelf position that is associated with load positions 5000 through 5999. In a preferred embodiment, the load positions assigned to each package car are the same for all package cars. Alternatively, a service provider and/or pre-loader may customize the load position of a package car in such a way that the load position reflected on the PAL may identify different load positions, depending on the package car that is being loaded.

In a preferred embodiment, a PAL has additional package information, including primary and secondary package sortation information, irregular drop-off identifier, a DCAP station, a low to high indicator, a commit time, the destination address/consignee name, a package tracking number. The primary sort identifier identifies the primary sort belt that moves the package through the carrier facility and the secondary sort identifier identifies the secondary belt that moves the package from the primary belt to the belt where the package is loaded. The irregular drop-off identifier identifies the location in the building where the package will be placed if it is too large, too heavy or shaped such that it cannot be placed on a sorting belt. In general, packages bearing an irregular drop-off identifier are sorted manually. A DCAP station associates the package to a particular data capture workstation in the flexible data capture system **215.** The low to high indicator indicates the order in which the package car should be loaded in the package car. In a preferred embodiment, if the low to high indicator is set, packages are loaded sequentially from the lowest number in the street range (i.e. 1 Main Street) to the highest number in the street range (i.e. 10 Main Street). If the low to high indicator is not set, the packages are loaded from the highest number (10 Main Street)

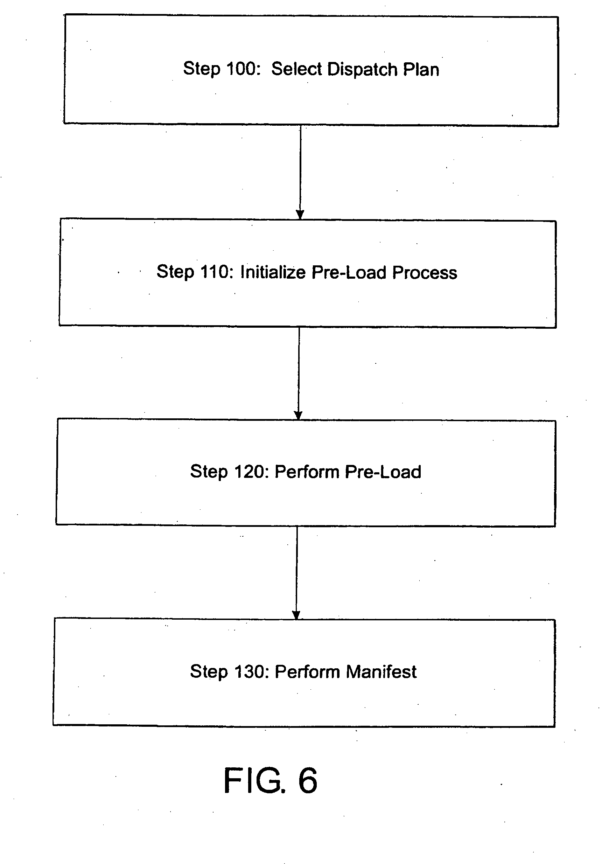

Fig. 6 is a process flow diagram that illustrates the steps of a pre-load process in accordance with an embodiment of the present invention. The process starts at the beginning of the day when an operator selects which dispatch plan will be used to perform a pre-load (Step100).
A. In Step 110 the pre-load assist application **230** prepares the selected dispatch plan for the real-time operation of the pre-load process. In Step 120 the pre-load operation begins. The flexible data capture system **215** begins capturing package information and sending it to the pre-load assist application 90, which assigns pre-load handling instructions to the packages. Once a pre-load handling instruction is generated and a PAL affixed to the package, in Step 130 the pre-load assist application **230** manifests the package.

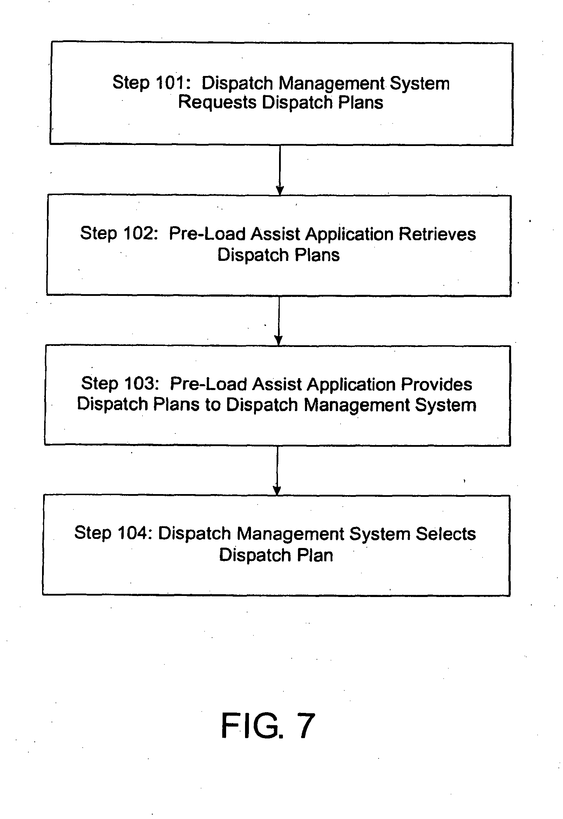

Fig 7 is a process flow diagram that illustrates the steps of selecting a dispatch plan in accordance with an embodiment of the present invention. In Step 101, a user requests the scheduled dispatch plan via the dispatch management system **240.** The request is sent from the dispatch management system **240** to the pre-load assist application **230** and, in Step 102 the pre-load assist application **230** connects with the dispatch plan database **235** and requests the dispatch plan scheduled for that day. In Step 103, the pre-load assist application **230** passes the scheduled dispatch plan to the dispatch management system **240.** In a preferred embodiment, the dispatch management system **240** has access to all available dispatch plans, with the scheduled dispatch plan marked as the default plan for the day. In Step 104, the dispatch management system **240** selects the dispatch plan that will be used for the pre-load process and the selected plan is sent to the pre-load assist application **230.** The selection of the dispatch plan can be made by an operator using the dispatch management system **240.**

In a preferred embodiment, a pre-load assist database **245** includes a cache of backup dispatch plans that are used for the pre-load operation in the event of a breakdown of the aforementioned process of retrieving a dispatch plan from the dispatch planning system **205.**

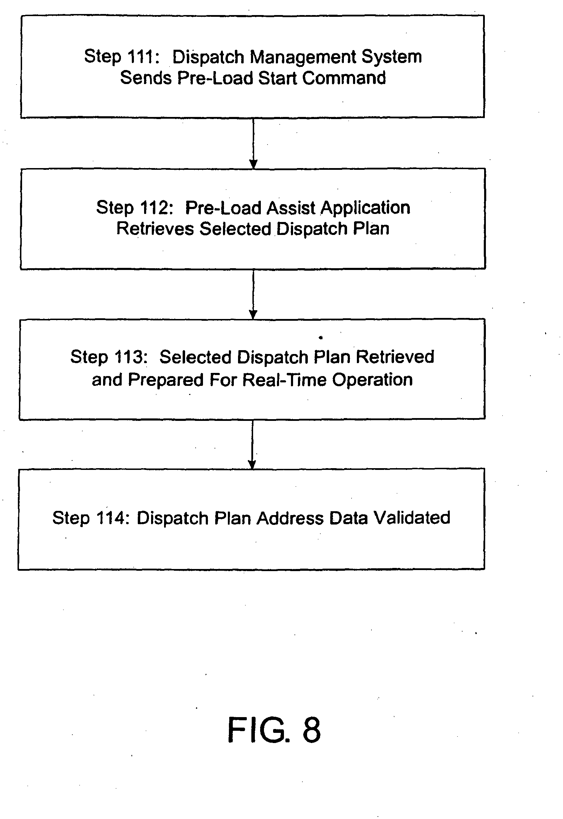

Fig. 8 is a process flow diagram that illustrates the steps of initializing a dispatch plan and readying the plan for real-time access in accordance with an embodiment of the present invention. In Step 111, the dispatch management system **240** sends an instruction to the pre-load assist application **230** to initialize the selected dispatch plan. In Step 112, the pre-load assist application **230** contacts the dispatch plan database **235** and identifies which dispatch plan will be used for the pre-load process. In Step 113, the selected dispatch plan is sent to the pre-load assist application **245** where it is decompressed for real-time access. In Step 114, the decompressed dispatch plan is sent to the address management system **70,** where a check is performed to make sure that all of the addresses in the dispatch plan are recognized as valid in the address validation databases used by the address management system **70.** In a preferred embodiment, the dispatch plan is decompressed and organized for real-time access/updates by the pre-load assist application **230** and stored in a pre-load assist database **245.**

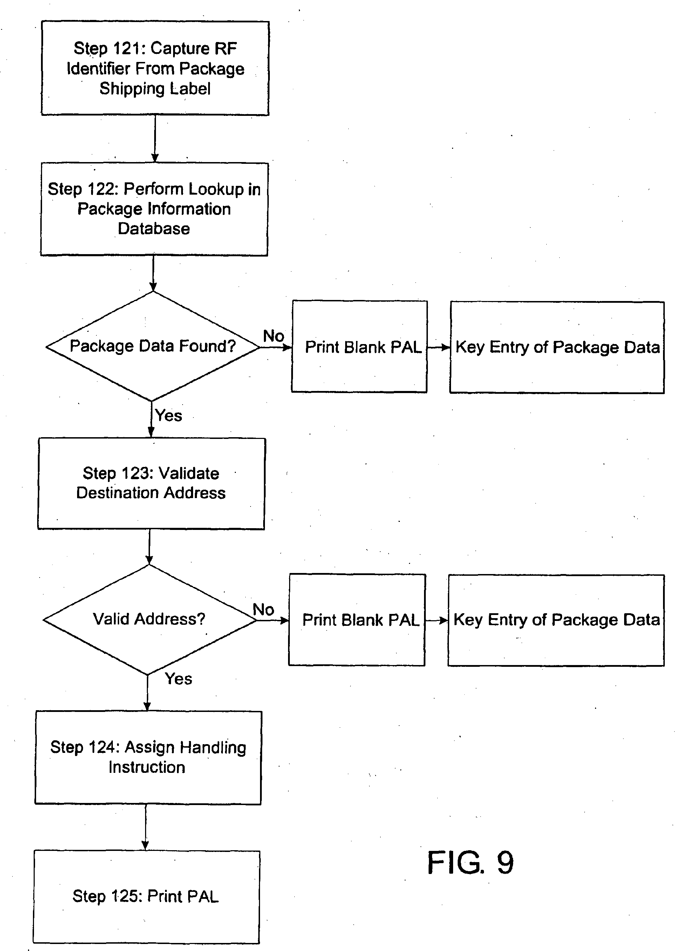

Fig. 9 is a process flow diagram that illustrates the steps of assigning pre-load handling instructions to packages in accordance with an embodiment of the present invention. The processes described below are sometimes referred to herein as the scan, print and apply (SPA) process, and the exception handling or exception capture process. The exception capture process applies to those packages that require key entry by a user to capture a valid destination address for the package.

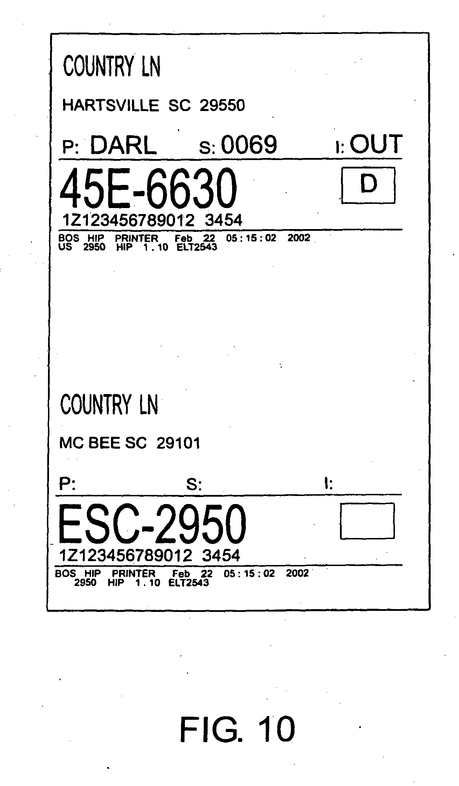

In Step 121, an interrogator **20** reads a RFID package tag **50** and captures a RF Identifier **55.** In Step 122, the flexible data capture system **215** uses the RF Identifier to perform a lookup in a package information database **65.** If the package information database **65** has package detail information about the package, including the destination address and service level of the package, then the process proceeds to Step 123. If the package information database **65** does not have a record of the package the flexible data capture system **215** generates and affixes a blank PAL to the package. Fig. 10 shows two PALs in accordance with an embodiment of the present invention, including a completed PAL on the top and a blank PAL on the bottom.

In the flexible data capture system **215,** key entry operators check packages that are headed to the pre-load area and if a package arrives with a blank PAL then the operator manually reviews the shipping label and attempts to key-enter a valid destination address for the package. If the operator is successful, a new PAL is generated and affixed to the package. If, however, the operator is unable to obtain a valid address for the package, the package is marked as an exception and sent to a special handling area where efforts additional efforts are made to obtain a valid destination address for the package.

Returning to Fig. 9, in Step 123 a package destination address is sent to the address management system **70** and the address is validated. If the address management system **70** determines that the destination address is a valid address, the process proceeds to Step 124 and the package detail information is sent from the flexible data capture system **215** to the pre-load assist application **210.** If, however, the address management system **70** determines that the destination address is not a valid address, a blank PAL is generated and the package proceeds to the key-entry operators.

In Step 124, the pre-load assist application **230** matches the package destination address against the dispatch plan. When the package destination address is matched against an address range in the plan, the package is associated with a specific loop-sequence combination. This loop-sequence combination, in turn, is assigned to a particular route and to a particular load position in a package car. The pre-load assist application **230** also checks the service level of the package to determine whether the package is subject to a particular commit time. Thus, by comparing the destination address and service level of the package against the dispatch plan, the pre-load assist application **230** is able to generate pre-load handling instructions for the package. If the package destination does not match against the dispatch plan, a PAL is printed bearing a not in system identifier. Packages bearing a not in system identifier are loaded on package cars without the benefit of pre-load handling instructions.

In Step 125, the pre-load handling instructions are sent from the pre-load assist application **230** to the flexible data capture system **215,** where a PAL is printed and affixed to the package.

Returning again to Fig. 6, once a pre-load handling instruction is generated and a PAL affixed to the package, in Step 130 the pre-load assist application **230** manifests the package. In a preferred embodiment, the process of manifesting a package means that the package is added to a particular load manifest. As described below, the load manifest is ultimately downloaded via the enhanced DIAD download system **220** to a DIAD unit **225** that a service provider carries on his or her route. The manifest in the DIAD unit **225** thus provides the service provider with a clear picture of the work to be completed. In addition, the process of manifesting allows the pre-load assist application **230** to monitor the amount of work allocated to each load.

The process of downloading the manifest to a DIAD unit **225** is discussed in greater detail below. In general, the pre-load assist application **230** stores the manifests for the pre-load in the pre-load assist database **245.** When the pre-load assist application **230** receives a request to download a manifest to a DIAD unit **225,** the pre-load assist application **230** retrieves the requested manifest from the pre-load assist database **245** and forwards the manifest to the enhanced DIAD download system **220.**

As the pre-load proceeds, users can view the work allocated to each load in the pre-load through the dispatch management system **240.** In a preferred embodiment, the dispatch management system **240** is a thin client in communication with the servers that control the pre-load process. Although users can affect the pre-load process through the dispatch management system **240,** the dispatch management client generally does not perform pre-load processing. In general, multiple users can monitor the progress of the pre-load system through the dispatch management system **240**.

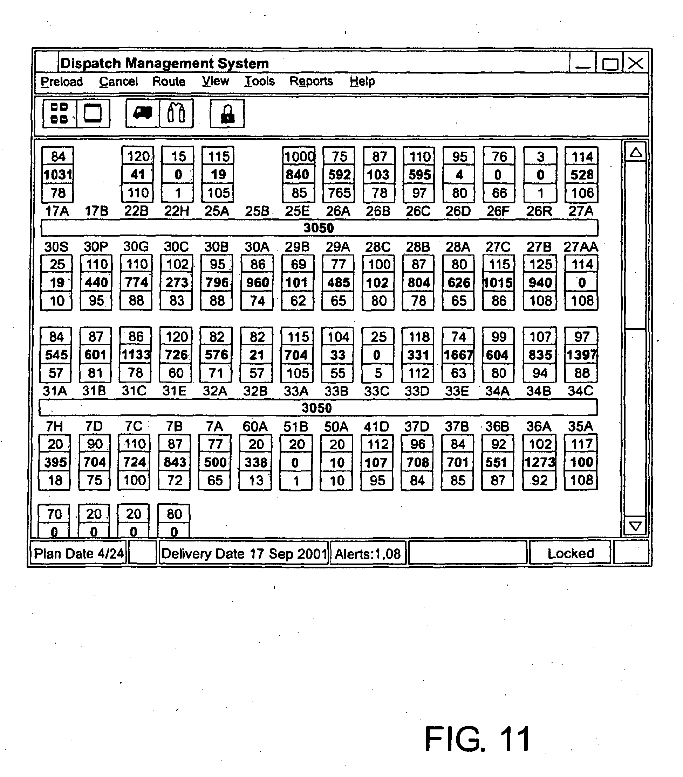

Fig. 11 is a screen shot from a dispatch management system **240** that is monitoring a pre-load progress in real-time in accordance with an embodiment of the present invention. The dispatch management client display comprises rows of rectangular boxes. Each rectangular box represents a load and each box is sub-divided into three portions. In this embodiment, the number in the top portion of the rectangular box represents the maximum units of work that should be allocated to the load. In this screen shot, a unit of work is the number of delivery or pick up stops that has been allocated to the load. However, in a preferred embodiment, the dispatch management client allows the use to monitor different measures for units of work, including, for example, the number of packages added to the load. The number at the bottom portion of each rectangular box represents a minimum amount of work that should be allocated to the load. Thus, in a preferred embodiment, if the amount of work allocated to a load is less than this minimum threshold, work may be cut from other loads and added to this load. Finally, the number in the middle portion of the rectangular box is a running tally of the amount of work that has been added to the load. As the pre-load proceeds and additional work is added to the loads, the numbers in the middle portions are incremented.

In a preferred embodiment, each of the rectangular boxes in the dispatch management display is color-coded. At the start of a pre-load, the rectangular boxes are grayed-out. After the pre-load has continued for a predetermined time or reached some other predetermined threshold, the rectangular boxes with loads that have exceeded the maximum units of work turn red and the boxes with loads that have less than the minimum number of units of work turn yellow. Rectangular boxes for loads that have an amount of work allocated to the load that falls between the minimum and maximum thresholds remain gray. In this way, an operator can quickly glance at the display and determine which of the loads need adjustments or may need adjustments to their workloads.

In a preferred embodiment, the information used to calculate a stop is stored in the pre-load assist database 245, including stop information, adjustment factors, calculation methods for each address and commit window groups. In general, one package does not necessarily equate to one stop; nor does a single address necessarily equate to a single stop. For example, assume a shopping mall has a single address but ten retail stores at that address. Assume further that fifty packages are to be delivered at the mall. If the work calculation was based solely on the number of packages, the service provider would be credited for fifty stops even though the service provider is not required to travel between stops to service the fifty packages. If, on the other hand, the work measurement was based solely on the number of stops, the service provider would only be credited for a single stop despite the fact that 50 packages are to be delivered across ten retail stores. Thus, in a preferred embodiment, the work measurement used to calculate a stop involves a calculation method that is unique to each address and the various methods used to calculate work are stored in the pre-load assist database 245.

Multiple dispatch management systems 240 are setup in a service center and may be monitoring the pre-load progress at any given moment. In a preferred embodiment, the dispatch management systems 240, implemented as clients in this embodiment, have a subscription-based relationship with the pre-load assist application 230. In essence, when a user wants to use a dispatch management terminal to monitor the pre-load, the dispatch management terminal contacts the pre-load assist application **230** and registers itself The pre-load assist application **230** continuously monitors the assignment of handling instructions, assignment of work loads, and manifesting of packages. At certain intervals, for example every thirty seconds or once a minute, the pre-load assist application **230** contacts one or more terminals of the dispatch management systems **240** that have registered with it and updates them with the new work measurement counts for each of the loads. One of ordinary skill in the art, however, will readily recognize that additional methods may be used to update the dispatch management terminals. In an alternative embodiment, for example, the dispatch management clients can be setup on a browser-type system that allows them to request a refresh of the pre-load data on command.

The following paragraphs describe the add/cut procedure in the pre-load assist system **230** in accordance with a preferred embodiment. As described above, the dispatch management system **240** provides visual indicators to users when a load has been allocated more than a maximum number of units of work. In such an event, the pre-load assist system **230** allows the user to request an add/cut through the dispatch management client. In a preferred embodiment, the actual add/cut processing is performed on the pre-load assist server; however, the request for the add/cut is initiated by the dispatch management system **240.** In addition, the pre-load assist server can refuse the add/cut request. This occurs, for example, if two users working from different dispatch management systems **240** have requested an add/cut for the same load. When this occurs, the pre-load assist server accepts the first received request and refuses the later-received request.

In a preferred embodiment, the user of the dispatch management system **240** performs an add/cut by double clicking on a rectangular box that corresponds to a load. This changes the dispatch management system display and the user receives detailed information about the units of work that have been allocated to that load. In the case of a load that has too much work, two types of cuts are possible: a planned cut and an unplanned cut. As discussed above, a planned cut is part of the dispatch plan and reflects, for example, the dispatch plan designer's recognition that on certain days the workload for a particular service provider will be heavy. In such case, the dispatch plan already knows which work should be cut from the load and to which load or loads the work should be added. In a preferred embodiment, in the case of a planned cut, the user merely sends a request to the pre-load assist system to implement the cut as planned. Alternatively, the user may request an unplanned cut. Unplanned cuts occur when too much work is allocated to a particular load and the overload is not anticipated in the dispatch plan.

In a preferred embodiment, there are two methods of cutting work from an overworked load: to cut remaining packages or to cut current packages. In the case of a cut of current packages, work is removed from one load and distributed to one or more other loads. To perform this type of cut, the user uses the dispatch management system **240** to identify the work to be cut from the load and further identifies the destination of the work that is being cut. The user's add/cut instructions are then sent from the dispatch management system **240** to the pre-load assist system as a cut request. If the pre-load assist system grants the request and makes the desired cut/add changes, all of the registered dispatch management systems are updated with the change in load work volumes. In addition, add/cut instructions are printed, which the user gives to the affected pre-loaders who physically redistribute the packages from the overworked load to the new loads.

In contrast, when a remaining cut is requested by a user packages are not physically removed from one load and redistributed to other loads. Instead, the pre-load assist application **230** changes the pre-load handling instructions that will be used on incoming packages. Thus, packages that would normally be directed to the overworked load may be redirected to other loads as designated by the user that has performed the cut. In addition, in a preferred embodiment the PALs that are printed from the altered pre-load handling instruction will be flagged to indicate to the pre-loaders that a current cut has occurred. This prevents confusion in the event that the pre-loader recognizes the address on a package and knows that the dispatch plan originally planned to have the package sent to a different load.

In a preferred embodiment, the adds and cuts made to a pre-load are not reflected in the manifest stored in the pre-load assist database **245.** In an alternative embodiment, however, the pre-load assist application **230** updates the manifest to reflect the planned and unplanned adds and cuts made during the pre-load operation. In still another embodiment, the pre-load assist database **245** stores a complete history of sort flow changes, including adds and cuts, and allows the user to undo changes that were made. Moreover, the pre-load assist database **245** includes an archive of past sorts, including the manifests and history of past sort flow changes.

The following paragraphs describe the enhanced DIAD download system **220** in accordance with an embodiment of the present invention. In a preferred embodiment, service providers carry a DIAD unit **225** with them as they service a route. DIAD units **225** are well known in the art and are used by UPS service providers in the package delivery environment. At present, the DIAD units **225** are used to collect information about the service provider delivery and pickup activities. At the end of the day, the service provider places the DIAD unit **225** in a rack and an application known as a DIAD control system **250** controls the upload of the information that was stored in the DIAD unit **225** throughout the day. Typically, some information about package pickups and deliveries is transmitted from the DIAD unit **225** to the carrier computer systems during the day. However, the upload that occurs at the end of the day provides a more detailed description of the work performed by the service provider.

Another function of the DIAD unit **225** that is well known in the industry is the ability to store address and consignee guidance information. Typically, at the start of the day the service provider picks up his or her DIAD unit **225** from the rack and the DIAD unit **225** has stored in it every potential address along that service provider's delivery route. As a driver delivers and picks up packages along the route, the driver enters the activity into the DIAD unit **225.** Because the address guidance information has been uploaded to the DIAD unit **225,** the service provider typically only needs to enter a few of the characters of the address and the DIAD unit **225** populates the rest of the address using the address guidance information. This limits the keystrokes that the service provider has to enter and lowers the number of typographical errors in entering address information. In addition, the consignee guidance information provides the service provider with any special customer-specific rules that may be needed to serve the customer.

A limitation of existing delivery systems that is recognized in the industry is the inability to provide a service provider with a clear picture of the work to be performed on a given day. While existing DIAD control systems are capable of uploading a list of every known address along a route, the DIAD units **225** do not tell the service provider which of those addresses are part of the delivery route for that day. At present, the only way that a service provider knows the work assigned to him or her on a given day is to physically search through the packages in the storage area of the package car. And this manual search often leads to delivery errors.

For example, assume a service provider expects to see all of the packages with an 8:30 AM commit time on the top side of shelf 1. Assume further that one of the packages with an 8:30 commit time was oversized and was loaded on the floor because it did not fit on the shelf. If the service provider does not notice the oversized package when he or she reviews the storage area, the package may not be discovered until after the commit time has passed. A need therefore exists in the industry for an improved system and method for providing service provider's with a manifest of the scheduled work for a route. Specifically, a need exists for a system that will download an electronic manifest of the work into the DIAD units **225** carried by service providers.

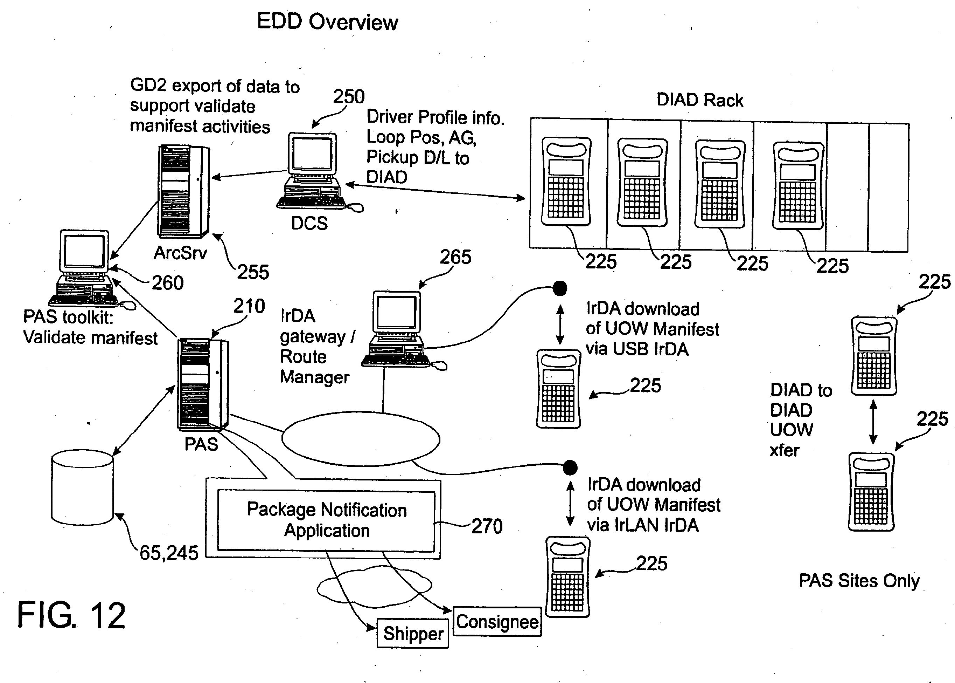

Fig. 12 illustrates an enhanced DIAD download system **220** that will download a service provider manifest to a DIAD unit **225** in accordance with an embodiment of the present invention. In this embodiment, the enhanced DIAD download system **220** includes one or more DIAD units **225,** a DIAD control system **250,** a data archive server **255,** a pre-load assist tool kit **260,** and a route manager **265.** In a preferred embodiment, the enhanced DIAD download system **220** is also in communication with the pre-load assist system **210,** which, in turn, communicates with the package information database **65** and/or the pre-load assist database **245.**

The DIAD control system **250** controls the upload and download of information from the DIAD units **225** while the units are stored in a rack. In a preferred embodiment, the DIAD control system **250** resides on a workstation in a service center and communicates with the DIAD units **225** via an optical communication interface. One of ordinary skill in the art however will readily recognize that other communication interfaces may be used instead of the optical interface, including infrared, cellular and/or wireless.

The data archive server **255** is another carrier server in communication with the DIAD control system **250** that receives information that has been downloaded from the DIAD units **225** at the end of day. As discussed below, among the information sent to the data archive server **255** is a disposition on all of the manifested packages, including information on the work performed that was listed on the manifest, the work performed that was missing from the manifest, and the work listed on the manifest that was not performed. This information is then passed from the data archive server **255** to the pre-load assist tool kit **260** where the disposition information is compared against the actual manifest. In a preferred embodiment, the comparison of the disposition data to the manifest provides a report card on the accuracy of the manifest information, the decisions made by the service provider during the day and the accuracy of the information received from customers.

The route manager **265** serves as an interface between the DIAD unit **225** and the pre-load assist system **210.** In the embodiment illustrated in Fig. 12, the route manager **265** communicates with the DIAD units **225** directly via an IrDA interface or through another IrDA device connected to a local area network. The DIAD units **225** access the local area network via an IrDA device connected to a universal serial bus port of a personal computer or, alternatively, through an IrDA device connected directly to the network. One of ordinary skill in the art, however, will readily recognize that other methods of communication between the route manager **265** and DIAD units **225** are possible and can be equally advantageous with the present invention.

The following paragraphs describe the process of using the enhanced DIAD download system **220** to download a manifest to a DIAD unit **225** in accordance with an embodiment of the present invention.

At the start of the day, the service provider retrieves a DIAD unit **225** from a rack of DIADs and immediately before beginning a route connects the DIAD unit **225** to an IrDA device and downloads a manifest of the activities for the day. In an alternative embodiment, the manifest may be downloaded to the DIAD unit **225** prior to the service provider retrieving the DIAD unit **225** from the rack. The advantage to waiting to download the manifest until just before the route begins is that the most recent version of the manifest is downloaded. Thus, last minute additions or modifications to the load that occur after the service provider has retrieved the DIAD unit **225** from the rack may not be included in the manifest if the DIAD control system **250** assumes responsibility for the manifest download. In an alternative embodiment, the DIAD control system **250** downloads the manifest while the DIAD unit **225** is in the rack and a cellular or wireless data radio updates the DIAD unit **225** with any changes to the manifest.

In a preferred embodiment, the route manager **265** receives the request from the DIAD unit **225** for a manifest and forwards the request to the pre-load assist system **210.** In a preferred embodiment, the pre-load assist system **210** retrieves the requested manifest from the package information database **65** and transmits the manifest information through the route manager **265** to the DIAD unit **225.** In an alternative embodiment, the pre-load assist system **210** may store and retrieve the manifest information from a pre-load assist database **245** rather than the package information database **65.** When the route manager **265** receives the manifest from the pre-load assist system **210,** it downloads the manifest to the DIAD unit **225** and the manifest thus is made available to the service provider during the route. In a preferred embodiment, a service provider can update the manifest information as often as necessary. For example, if an add/cut is performed after the service provider has downloaded the manifest, the service provider can reconnect the DIAD unit **225** to an IrDA device to update the manifest with the add/cut information. Alternatively, the DIAD unit **225** is able to communicate via wireless, cellular or other communication methods known in the art and updates to the manifest are transmitted to the DIAD unit **225** after the service provider begins the route.

The DIAD unit **225** is programmed to perform a variety of functions using the manifest data, including, as a non-limiting example, work transfer, "determine next activity" and "perform activity" functions.

In the case of a work transfer, manifest information is passed between DIAD units **225.** In a preferred embodiment, manifest information for one or more units of work is passed from one DIAD unit **225** to another DIAD unit **225** using the IrDA ports on the units. For example, if one service provider has fallen behind his or her delivery schedule, the service provider has the option of transferring some of the work to another service provider. If the work transferred involves packages that need to be delivered, the service providers will meet at a convenient location where the physical packages will be transferred from one package car to another. In a preferred embodiment, the service providers will be able to change the electronic packages as well. Thus, by allowing DIAD unit **225** to DIAD unit **225** communication, the work associated with the first service provider's manifest may be passed to the second service provider's manifest. As another example, if the work that is transferred does not require the physical exchange of packages, for example if the transfer work is a pick up at a particular location, the work associated with the pickup may be electronically exchanged between DIAD units **225** via a cellular, wireless, wide area network or other communication methods known in the art. Thus, two or more service providers can exchange units of work without being near each other.

Another benefit of having manifest information present in the DIAD units **225** is the "determine next activity" function. At present, a service provider is continuously moving in and out of the storage area of the package car as he or she proceeds along a delivery route, repeatedly reviewing the work that needs to be completed. And a service provider's failure to keep a close eye on the work often results in a missed commit time or the need to backtrack along the route to deliver a package that was missed. The "determine next activity" function of the DIAD unit **225** addresses this planning problem by tracking the manifested work and presenting the service provider with an ordered plan to complete the work.

In a preferred embodiment, a service provider can access the manifest data in several ways, including a whole view and a commit time view. When the whole view is used, the manifest is organized by commit and delivery order listing (DOL). DOL organizes work based on the sequence established by the dispatch plan without regard to premium service levels. The commit time takes into account that work with a premium service level must be completed on or before established commit times.
The whole view of the manifest defaults to the DOL view of the manifest; however, work that has a commit time gains priority in the manifest list as the commit time approaches. In other words, the manifest display increases the priority of commit time work to notify the service provider that a commit time is approaching and the service provider needs to start considering the work for a future delivery.

In a preferred embodiment, the "determine next activity" function of the DIAD unit **225** controls the manner in which the manifest is organized in the display. As a particular commit time approaches, the work that must be completed by the approaching commit time is given higher precedence in the list of work. In one embodiment, if more than one package has the same commit time, the commit packages are sorted by DOL. In an alternative embodiment, the determine next activity function estimates the location of the service provider based upon the work remaining on the manifest and organizes the commit time work so that the manifest lists those commit time packages that are closest to the service provider's present position. In still another embodiment, the DIAD unit **225** is equipped with a global positioning system (GPS) and uses the GPS unit to determine the service provider position.

In a preferred embodiment, the service provider may also view the manifest using a commit time view. The commit time view lists only that work on the manifest that has a commit time and, in a preferred embodiment, the work is organized first by commit time and then by DOL. In alternative embodiments, the commit time work is organized first by commit time and then by the work that is closest to the service provider current location.

Still another benefit of having manifest information present in the DIAD units **225** is the perform activity function. In a preferred embodiment, the perform activity function is used when the service provider makes a delivery or picks up a package at a stop. Because the DIAD unit **225** already has the delivery information in electronic format, the delivery information is pre-populated on the DIAD unit **225** display and the service provider does not have to key enter the delivery information. In general, when a service provider makes a delivery he or she will scan a bar code on the package shipping label and the delivery information for the package will be pre-populated on the DIAD unit **225** display. In addition, the perform activity provides the service provider with accessorial data for that stop, including information such as whether an adult signature is required for the manifested work and/or whether the work is a cash-on-delivery transaction. One of ordinary skill in the art will readily understand that other types of accessorial information may be included in the manifest and made available to the service provider as part of the perform activity function.

In a preferred embodiment, as work is completed the work disappears from the manifest display. At the end of the day the manifest is cleared and the service provider returns the DIAD unit **225** to the DIAD rack. Disposition information collected throughout the day is then uploaded to the DIAD control system **250** and is passed to the data archive server **255** and pre-load assist tool kit **260.** In a preferred embodiment, the pre-load assist tool kit **260** then compares the disposition information against the manifest, which provides feedback about the accuracy of the manifest process, the decisions made by the service provider and the accuracy of information received from the customers.

### D. Package Notification through RFID Technology

The following paragraphs describe systems and methods that use RFID technology to identify a package and notify customers of an estimated time of arrival for inbound packages.

In a preferred embodiment, a pre-load assist system **210** performs the package notification function. As described above, a pre-load operation begins with the scheduling of a dispatch plan. At a high level, the dispatch plan is a file that has divided the territory for a service center into separate loops, and further sub-divided the loops into separate route. Every potential address in a service provider route is identified in a dispatch plan and is assigned a sequence number.
As the service provider performs the work assigned to a route, the address sequence in the dispatch plan determines the order in which the addresses in the route are serviced.

As packages are received in a pre-load system **200,** an interrogator **20** in the flexible data capture system **215** reads the RFID package tags **50** associated with each package and captures a unique RFID identifier **55.** In one embodiment, the RFID identifier **55** contains sufficient information about the package to allow a pre-load assist application **230** to match the package against the dispatch plan. In an alternative embodiment, the pre-load assist application **230** uses the RFID identifier **55** as an index into a package information database **65** to obtain the necessary package information. In either case, the package information made available by the RFID identifier **55** allows the pre-load assist application **230** to generate a pre-load handling instruction for the package.

Once the pre-load handling instruction is assigned to the package, the pre-load assist application **230** manifests the package. In a preferred embodiment, the process of manifesting a package means that the package is added to a particular load manifest. As additional packages are processed by the pre-load system 200, the load manifest for each load in the pre-load is updated. In a preferred embodiment, at the end of the pre-load the load manifests provide a complete picture of the work assigned to each service provider route. In addition, the sequence in which the work will be performed is also available in the dispatch plan.

At the completion of the pre-load operation, a package notification application **270** imports each of the load manifests generated in the pre-load operation. The notification application **270** compares the load manifests against the dispatch plan to determine the sequence in which the work associated with each load will be performed. In a preferred embodiment, the notification application **270** consults work measurement tables that provide estimates based on historical data of the time required to perform each unit of work. The notification application **270** then assigns work estimates to each task in a load manifest and, in this way, approximates the time of day when the service provider will perform each unit of work assigned to a given route.

Once the package notification application **270** has estimated the time at which each unit of work in each manifest will be completed, the application **270** determines which parties have requested inbound notification. In one embodiment, inbound package notification is tied to a particular package service level. In such case, the notification application **270** reviews the service levels for each unit of work in a manifest and identifies those that are associated with inbound notification. For each unit of work requiring a notification, the notification application **270** performs a lookup into the package information database 65 and retrieves the necessary contact information. Thus, if an email notification is associated with a particular service level the notification application **270** retrieves an email address for the person or entity that has been requested to receive the notification. Alternatively, if a facsimile notification is associated with another service level, the notification application **270** retrieves a facsimile number and the name of the person to receive the notification.

A request for notification may originate with either a shipper or a consignee. Further, when a shipper makes the request, the shipper may request that consignees receive notification of inbound packages and/or that the shipper be notified when packages are about to be delivered. The following paragraph describes the process wherein a shipper requests that his or her consignees be notified of incoming packages.

In a preferred embodiment, the package notification application **270** determines each of the packages from the pre-load for which the shipper has requested consignee notification and aggregates those packages that have the same shipper contact information. Thus, if a shipper has two packages in the same pre-load that are bound for the same consignee, the notification application **270** will send a single notification that identifies each of the packages and their respective anticipated times of arrival. This is true, even if the packages will be delivered via different service providers from different routes. As another example, if the shipper sends packages to two different consignees, each consignee can receive a separate notification that lists only the package associated with that consignee.

A similar aggregation can occur for consignees that request notification of inbound packages, even for inbound packages that have been shipped by different shippers. For example, assume that a retailer has requested notification for inbound packages, and assume further that in a particular pre-load three packages will be delivered to the retailer from shipper ABC and two packages will be delivered from shipper XYZ. In a preferred embodiment, the notification application **270** will aggregate the package notifications and provide the retailer with a single notification that identifies the five inbound packages, the shipper associated with each package and the anticipated arrival time of each package.

In a preferred embodiment, the notification application **270** is configured to provide notifications via email, facsimile, pager or automated messaging system. One of ordinary skill in the art, however, will readily recognize that other forms of communicating information about inbound packages are known in the art and may be used with the present invention.

### E. Other Uses of RFID Technology in Package Delivery Systems

In another embodiment of the present invention, individual containers in a carrier system are tagged with a unique RFID identifier so that the use and location of the containers may be monitored over time. RFID tags on containers also allow monitoring of vehicle utilization. Alternatively, RFID tags can be affixed to the vehicles. From this utilization information, the carrier has sufficient information to make dynamic or real-time adjustments to carrier fleet sizes to maximize vehicle utilization. In a related embodiment, the utilization information allows the carrier to employ alternative financing, accounting, or charging methods responsive to the container and vehicle use patterns. Moreover, the ability to track container usage helps the carrier to prevent the loss or destruction of package containers by indicating where in the system the containers are stored and/or lost.

In another embodiment, the RFID tags on containers aid the carrier in volume planning. As described above, the package sortation systems in hubs allows the carrier to forecast where in the carrier system each package is headed. This ability will also allow the systems in one hub facility to notify downstream locations of inbound shipments. Thus allowing these locations to plan for the next stage in the sortation or delivery process based on actual package volumes. In a related embodiment, the sortation system and hub facilities can use the package information provided by RFID to notify pre-load systems of the inbound package volume in a pre-load. And, in a preferred embodiment, the pre-load system could determine from the notification the work volume assigned to each load in the pre-load. Accordingly, adjustments could be made to the dispatch plan or pre-load operation before the first package is ever pre-loaded.

In still another embodiment, electronic product codes (EPCs) may be added to packages. The use of EPC data coupled with RFID technology would thus allow the identification of the contents of the package. In one embodiment, a unique RFID package identifier that identifies the contents of a package would be used to aid in the processing of packages in customs by providing detailed customs information that would allow the package to be processed by customs without necessitating the opening and physical inspection of the package contents. Many government agencies, including customs, require information about the contents of the package. In a preferred embodiment, the EPC code of the package is added to the package information database and therefore is electronically available to carrier custom systems or other system that require package content information. Similarly, package content can be classified and package sortation and delivery process can be tailored to the content of the packages. Thus, for example, the sortation and delivery of hazardous or perishable merchandise differ from the processing used for other packages.

As previously described, the identification of packages by radio signal allows the sortation and movement of packages without requiring that packages be oriented on a conveyor belt. In another embodiment, packages move through a hub facility or other sortation system in a group, or even in a single container or vehicle, and an interrogator 20 is coupled to a data processing application configured to obtain and separate information from multiple RFID tags that enter the interrogation zone at the same time. In this way, the packages can be sorted and/or directed to the next downstream location without being physically removed from a container or separated from other packages. In another embodiment, a carrier vehicle or container carrying multiple packages may be scanned as the container or vehicle moves into or out of a hub or pre-load facility and the RFID tags of each package read and compared against a sortation plan to insure that packages have not been misloaded. The process of scanning individual packages just before moving them onto carrier vehicles is known in the art and discussed in U.S. Patent No. 5,804,802 to Card.

The package sortation methods and systems, which comprise an ordered listing of selectable services can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can contain, store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection (electronic) having one or more wires, a portable computer diskette (magnetic), a random access memory (RAM) (magnetic), a read-only memory (ROM) (magnetic), an erasable programmable read-only memory (EPROM or Flash memory) (magnetic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

Further, any process descriptions or blocks in flow charts should be understood as representing modules, segments, or portions of code which include one or more executable instructions for implementing specific logical functions or steps in the process, and alternate implementations are included within the scope of the preferred embodiment of the present invention in which functions may be executed out of order from that shown or discussed, including substantially concurrently or in reverse order, depending on the functionality involved, as would be understood by those reasonably skilled in the art of the present invention.

It should be emphasized that the above-described embodiments of the present invention, particularly any "preferred embodiments" are merely possible examples of the implementations, merely set forth for a clear understanding of the principles of the invention.

In concluding the detailed description, it should be noted that it will be obvious to those skilled in the art that many variations and modifications can be made to the preferred embodiment without substantially departing from the principles of the present invention. Also, such variations and modifications are intended to be included herein within the scope of the present invention as set forth in the appended claims.

### INDUSTRIAL APPLICABILITY

The disclosed systems, methods, and computer-readable media relate to the package shipment industry and have industrial applicability therein. More specifically, the disclosed systems, methods, and media are useful for sorting and routing packages for transport to respective destinations. In addition, the disclosed systems, methods, and media can be used to track packages, assign work to packages, notify those involved with package shipments of the status of packages, and other uses.

## Claims

1. A method **characterized by**:
scanning a radio-frequency identification (RFID) tag (50) on a package to generate scanned shipping data including a package identifier;
sending the scanned shipping data including the package identifier from the scanner to a hub control system remote from the scanner;
receiving the scanned shipping data including the package identifier at the hub control system;
generating at the hub control system (30) a handling instruction for the package based on the scanned shipping data by using the package identifier to retrieve package information indicating the package's destination and any special handling instructions, and using the package's destination to determine one of multiple sort destinations within a hub facility to which the package is to be routed by execution of the handling instruction;
transmitting the handling instruction from the hub control system to a machine controller associated with respective conveyors and sorting devices along a sortation path to the one sort destination;
receiving the handling instruction at the machine controller for the multiple conveyors and sorting devices along the sortation path; and
sorting the package by executing the handling instruction at the machine controller for the multiple conveyors and sorting devices to route the package along the sortation path to the sort destination corresponding to the package's destination and any special handling instructions, at least some of the multiple sorting devices positioned at different tip positions in the hub facility spaced apart from one another by respective ones of the multiple conveyors.

2. A method as claimed in claim 1 wherein the scanning is performed by conveying the package on a belt (15) past an interrogator (20) that identifies shipping data by scanning the RFID tag (50).

3. A method as claimed in claim 1 or claim 2 wherein the hub control system (30) uses a hub master file to determine a tip position for the package based on the scanned shipping data.

4. A method as claimed in claim 3 wherein the scanned shipping data comprises an RFID identifier (55), and the hub control system (30) forwards the RFID identifier (55) to a package information database (65) for use as an index to retrieve package information data to generate the handling instruction.

5. A method as claimed in any preceding claim wherein the handling instruction comprises instructions for sorting the package.

6. A method as claimed in any preceding claim wherein the handling comprises sorting the package for delivery to a hub facility based on the scanned shipping data.

7. A method as claimed in any preceding claim wherein the handling instruction comprises instructions for preparing the package prior to loading the package.

8. A method as claimed in any preceding claim further **characterized by**:
sorting the package for delivery to an addressee identified by the scanned shipping data based on the handling instruction.

9. A method as claimed in any preceding claim further **characterized by**:
storing the scanned shipping data in a package tracking database (95).

10. A method as claimed in any preceding claim wherein the scanned shipping data comprises package information data including an address, the method further **characterized by**:
validating the address using a street and consignee alias database (85) of an address management system (70).

11. A method as claimed in claim 1 wherein the scanned shipping data comprises package information data for which no valid address can be determined, the method further **characterized by**:
key-entering data based on the shipping label associated with the package to generate the handling instruction.

12. A method as claimed in claim 1 further **characterized by**:
capturing with a camera an image of the package for use by an operator to determine and key-enter a valid address for the package in case the scanned shipping data does not comprise sufficient data to determine the address to which the package is to be shipped.

13. A method as claimed in any preceding claim wherein the RFID tag (50) is scanned at multiple locations to generate scanned shipping data used by the hub control system (30) to route the package on conveyor belts (15) within a hub facility to a tip position indicated by the scanned shipping data.

14. A method as claimed in claim 13 further **characterized by**:
updating a package tracking database (95) based on the hub control system (30) delivering the package to a tip position in a hub facility.

15. A method as claimed in claim 14 further **characterized by**:
notifying a shipper or a consignee of the package that the package has been delivered to a tip position.

16. A method as claimed in claim 14 wherein the handling instruction is generated by using the scanned shipping data to retrieve the handling instruction from a load plan stored in a database.

17. A method as claimed in claim 15 further **characterized by**:
estimating time of delivery of the package based on the scanned shipping data; and
notifying the shipper and/or consignee of the estimated time of delivery of the package.

## Patentansprüche

1. Ein Verfahren, **gekennzeichnet durch**
Abtasten eines radiofrequenten Identifikations(RFID)-Schildchens (50) auf einem Paket zur Erzeugung abgetasteter Versanddaten einschließlich eines Paketidentifizierers;
Senden der abgetasteten Versanddaten einschließlich des Paketidentifizierers vom Abtaster zu einem von diesem entfernten Verteilzentrum-Steuersystem;
Empfangen der abgetasteten Versanddaten einschließlich des Paketidentifizierers an dem Verteilzentrum-Steuersystem;
Erzeugen einer Behandlungsinstruktion für das Paket bei dem Verteilzentrum-Steuersystem (30) aufgrund der abgetasteten Versanddaten unter Verwendung des Paketidentifizierers zur Gewinnung von Paketinformation, welche den Bestimmungsort des Paketes und eventuelle spezielle Behandlungsinstruktionen enthält, und Bestimmen eines von mehreren Sortierungsbestimmungsorten innerhalb der Verteilzentrumseinrichtungen, wohin das Paket geleitet werden soll, unter Benutzung des Paketbestimmungsortes durch Ausführung der Behandlungsinstruktionen;
Übermitteln der Behandlungsinstruktionen von dem Verteilzentrum-Steuersystem zu einer Maschinensteuereinrichtung, welche jeweiligen Transportbändern und Sortierungseinrichtungen längs eines Sortierungsweges zu einem Sortierungsbestimmungsort zugeordnet ist;
Empfangen der Behandlungsinstruktion an der Maschinensteuereinrichtung für die mehreren Förderbänder und Sortierungseinrichtungen längs des Sortierungsweges und
Sortieren des Paketes **durch** Ausführung der Behandlungsinstruktion an der Maschinensteuereinrichtung für die mehreren Förderbänder und Sortierungseinrichtungen zur Leitung des Paketes längs des Sortierungsweges zu dem Sortierungsbestimmungsort entsprechend dem Paketbestimmungsort und jeglichen speziellen Behandlungsinstruktionen, wobei wenigstens einige der mehreren Sortiereinrichtungen an verschiedenen Abwurfpositionen in dem Verteilzentrum **durch** jeweils bestimmte der mehreren der Förderbänder voneinander beabstandet sind.

2. Verfahren nach Anspruch 1, bei welchem die Abtastung durchgeführt wird durch Fördern des Paketes auf einem Förderband (15) an einem Abfrager (20) vorbei, welcher die Versanddaten durch Abtasten des RFID-Schildchens (50) identifiziert.

3. Verfahren nach Anspruch 1 oder 2, bei welchem das Verteilzentrum-Steuersystem (30) eine Verteilzentrummasterdatei benutzt, um die Abwurfposition für das Paket aufgrund der abgetasteten Versanddaten zu bestimmen.

4. Verfahren nach Anspruch 3, bei welchem die abgetasteten Versanddaten einen RFID-Identifizierer (55) aufweisen und das Verteilzentrum-Steuersystem (30) den RFID-Identifizierer (55) zu einer Paketinformationsdatenbank (5) weiterleitet zur Verwendung als Index zur Wiedergewinnung der Paketinformationsdaten für die Erzeugung der Behandlungsinstruktion.

5. Verfahren nach einem der vorstehenden Ansprüche, bei welchem die Behandlungsinstruktion Instruktionen zur Sortierung des Paketes enthält.

6. Verfahren nach einem der vorstehenden Ansprüche, bei welchem die Behandlung ein Sortieren des Paketes zur Lieferung an eine Verteilzentrumeinrichtung aufgrund der abgetasteten Versanddaten umfasst.

7. Verfahren nach einem der vorstehenden Ansprüche, bei welchem die Behandlungsinstruktion Instruktionen zur Vorbereitung des Paketes vor seiner Aufladung umfasst.

8. Verfahren nach einem der vorstehenden Ansprüche **gekennzeichnet durch** ein Sortieren des Paketes zur Übermittlung an einen Adressaten, der **durch** die abgetasteten Versanddaten aufgrund der Behandlungsinstruktionen identifiziert ist.

9. Verfahren nach einem der vorstehenden Ansprüche weiterhin **gekennzeichnet durch** Speicherung der abgetasteten Versanddaten in einer Paketverfolgungsdatenbank (95).

10. Verfahren nach einem der vorstehenden Ansprüche, bei welchem die abgetasteten Versanddaten Paketinformationsdaten einschließlich einer Adresse beinhalten und ferner **gekennzeichnet sind durch** Validierung der Adresse unter Verwendung einer Straßen- und Ortsbezeichnungsdatenbank (85) eines Adressenmanagementsystems.

11. Verfahren nach Anspruch 1, bei welchem die abgetasteten Versanddaten Paketinformationsdaten umfassen, für welche keine gültige Adresse bestimmt werden kann, und weiterhin **gekennzeichnet durch** eine Tasteneingabe von Daten aufgrund eines dem Paket zugeordneten Versandschildchens zur Erzeugung der Behandlungsinstruktion.

12. Verfahren nach Anspruch 1 weiterhin **gekennzeichnet durch**
Aufnahme eines Bildes des Paketes mit einer Kamera zur Verwendung durch einen Operator zur Bestimmung und Tasteneingabe einer gültigen Adresse für das Paket für den Fall, dass die abgetasteten Versanddaten keine ausreichenden Daten zur Bestimmung der Adresse enthalten, an welche das Paket zu versenden ist.

13. Verfahren nach einem der vorstehenden Ansprüche, bei welchem das RFID-Schildchen (50) an mehreren Stellen abgetastet wird zur Erzeugung abgetasteter Versanddaten, welche von dem Verteilzentrum-Steuersystem (30) benutzt werden, um das Paket auf Förderbändern (15) innerhalb der Verteilzentrumseinrichtungen zu einer Abwurfposition zu leiten, welche durch die abgetasteten Versanddaten angegeben wird.

14. Verfahren nach Anspruch 13 ferner **gekennzeichnet durch** Aktualisierung einer Paketverfolgungsdatenbank (95) in Abhängigkeit von dem das Paket zu einer Abwurfposition in der Verteilzentrumanlage befördernden Verteilzentrum-Steuersystems (30).

15. Verfahren nach Anspruch 14 ferner **gekennzeichnet durch** Informierung eines Versenders oder Adressaten des Paketes, dass dieses zu einer Abwurfposition befördert worden ist.

16. Verfahren nach Anspruch 14, bei welchem die Behandlungsinstruktion unter Benutzung der abgetasteten Versanddaten so erzeugt wird, dass sie aufgrund eines in einer Datenbank gespeicherten Ladeplans gewonnen wird.

17. Verfahren nach Anspruch 15 ferner **gekennzeichnet durch** Abschätzen der Beförderungszeit des Paketes aufgrund der abgetasteten Versanddaten und
Informierung des Versenders und/oder Adressaten über die geschätzte Lieferzeit des Paktes.

## Revendications

1. Procédé **caractérisé par**:
le scannage d'une étiquette d'identification par radiofréquence (RFID) (50) sur un colis afin de générer des données d'expédition scannées comportant un identificateur de colis,
l'envoi des données d'expédition scannées comportant l'identificateur de colis depuis le scanner à un système de commande de plateforme à distance du scanner,
la réception des données d'expédition scannées comportant l'identificateur de colis par le système de commande de plateforme,
la génération au système de commande de plateforme (30) d'une instruction de manutention du colis sur la base des données d'expédition scannées en utilisant l'identificateur de colis pour récupérer des informations relatives au colis indiquant la destination de celui-ci, ainsi que toute instruction de traitement particulier, et en utilisant la destination du colis pour déterminer une parmi plusieurs destinations de tri à l'intérieur d'un centre de tri, auquel le colis est acheminé en exécutant l'instruction de manutention,
la transmission de l'instruction de manutention par le système de commande de plateforme à un contrôleur de machine associé à des convoyeurs et dispositifs de tri respectifs le long d'un chemin de tri jusqu'à la destination de tri,
la réception de l'instruction de manutention au contrôleur de machine pour la pluralité des convoyeurs et dispositifs de tri le long du chemin de tri, et
le tri du colis en exécutant l'instruction de manutention au contrôleur de machine pour la pluralité des convoyeurs et dispositifs de tri, afin d'acheminer le colis le long du chemin de tri à la destination de tri qui correspond à la destination du colis, ainsi que toute instruction de manutention particulière, au moins quelques-uns de la pluralité des dispositifs de tri étant positionnés, dans le centre de tri, à différentes positions d'extrémité, écartées les unes des autres par des convoyeurs respectifs de la pluralité des convoyeurs.

2. Procédé suivant la revendication 1, dans lequel le scannage est effectué en convoyant le colis sur un tapis (15) au-delà d'un interrogateur (20) qui identifie les données d'expédition en scannant l'étiquette RFID (50).

3. Procédé suivant la revendication 1 ou 2, dans lequel le système de commande de plateforme (30) utilise un fichier maître pour déterminer une position d'extrémité pour le colis sur la base des données d'expédition scannées.

4. Procédé suivant la revendication 3, dans lequel les données d'expédition scannées comportent un identificateur RFID (55) que le système de commande de plateforme (30) transmet à une banque de données d'informations relatives aux colis (65) destinée à être utilisée comme index pour récupérer les données d'information relatives au colis, afin de générer une instruction de manutention.

5. Procédé suivant une quelconque des revendications précédentes, dans lequel l'instruction de manutention comprend des instructions de tri du colis.

6. Procédé suivant une quelconque des revendications précédentes, dans lequel la manutention comprend le tri du colis en vue de sa livraison à un centre de tri sur la base des données d'expédition scannées.

7. Procédé suivant une quelconque des revendications précédentes, dans lequel l'instruction de manutention comprend des instructions de préparation du colis préalablement à son chargement.

8. Procédé suivant une quelconque des revendications précédentes, **caractérisé en outre par**:
le tri du colis en vue de sa livraison à un destinataire identifié par les données d'expédition scannées sur la base de l'instruction de manutention.

9. Procédé suivant une quelconque des revendications précédentes, **caractérisé en outre par**:
le stockage des données d'expédition scannées dans une banque de données de repérage de colis (95).

10. Procédé suivant une quelconque des revendications précédentes, dans lequel les données d'expédition scannées comprennent des données d'information relatives à des colis incluant une adresse, le procédé étant **caractérisé en outre par**:
la validation de l'adresse en utilisant une banque de données de rues et d'alias de destinataires (85) d'un système de gestion d'adresses (70).

11. Procédé suivant la revendication 1, dans lequel les données d'expédition scannées comprennent des données d'information relatives à des colis, pour lesquels aucune adresse valide ne peut être déterminée, le procédé étant **caractérisé en outre par**:
la saisie de données sur la base de l'étiquette d'expédition associée au colis, afin de générer l'instruction de manutention.

12. Procédé suivant la revendication 1, **caractérisé en outre par**:
la capture d'une image du colis à l'aide d'une caméra en vue d'une utilisation par un opérateur, afin de déterminer et de saisir une adresse valide pour le colis, dans le cas où les données d'expédition ne comprennent pas de données suffisantes pour déterminer l'adresse à laquelle le colis doit être expédié.

13. Procédé suivant une quelconque des revendications précédentes, dans lequel l'étiquette RFID (50) est scannée à plusieurs endroits, afin de générer des données d'expédition scannées utilisées par le système de commande de plateforme (30) pour acheminer le colis sur des tapis convoyeurs (15) à l'intérieur d'un centre de tri vers une position d'extrémité indiquée par les données d'expédition scannées.

14. Procédé suivant la revendication 13, **caractérisé en outre par**:
une mise à jour de la banque de données de repérage (95) sur la base du système de commande de plateforme (30) acheminant le colis à une position d'extrémité dans un centre de tri.

15. Procédé suivant la revendication 14, **caractérisé en outre par**:
la notification à un expéditeur ou un destinataire du colis de l'acheminement de celui-ci à une position d'extrémité.

16. Procédé suivant la revendication 14, dans lequel l'instruction de manutention est générée en utilisant les données d'expédition scannées pour récupérer l'instruction de manutention dans un plan de chargement stocké dans une banque de données.

17. Procédé suivant la revendication 15, **caractérisé par** :
l'estimation du délai de livraison du colis sur la base des données d'expédition scannées
et
la notification à l'expéditeur et/ou au destinataire du délai de livraison estimé du colis.
